# EUROPEAN PATENT SPECIFICATION

(11) **EP 4 045 837 B1**
(45) Date of publication and mention of the grant of the patent: **03.12.2025**
(21) Application number: 20876498.5
(22) Date of filing: 16.10.2020
(51) Int. Cl.: B62B 3/08, B62B 3/10

(54) **DEWAR TIPPER**
DEWAR-KIPPER
ORGANE DE BASCULEMENT D'UN RÉCIPIENT DE DEWAR

(30) Priority: 18.10.2019 US 201916657292
(43) Date of publication of application: 24.08.2022
(73) Proprietor: Cryoport, Inc., Brentwood, TN 37027 (US)
(72) Inventor: OBRAD, Frank, Fullerton, CA 92835 (US); VANWEZEL, Carl, Santa Rosa Valley, CA 93012 (US)
(74) Representative: Warren, Caroline Elisabeth
(86) International application number: PCT/US2020/056066
(87) International publication number: WO 2021/076953

(56) References cited:
- EP-A1- 0 242 820
- CA-A- 627 879
- US-A- 4 095 707
- US-A- 4 213 727
- US-A- 4 738 582
- US-A1- 2004 183 268
- US-A1- 2017 247 204
- US-B2- 6 733 017

## Description

### BACKGROUND

### Field

This specification relates to a system, device or apparatus for transporting, storing, emptying and recharging a storage device for use in cryogenic shipping.

### Description of the Related Art

Shipping biological samples, specimens, or other materials at times must be done a very cold or cryogenic temperatures to ensure that the shipping material does not spoil or degrade. Oftentimes, insulated devices known as "dewars" are used and loaded with a coolant (such as liquid nitrogen) and then the materials in kept cold in the dewar. However, the coolant will eventually warm up to room temperature and must be removed from the dewar in order for the dewar to be used again.

Lab or transportation technicians, shippers or other professionals must empty all liquids or gases, such as liquid nitrogen, in a dry vapor shipper, such as a dewar, prior to shipment to meet regulatory requirements. No cryogenic liquids or gases may remain in the dry vapor shipper or be allowed to leak from the shipper during transportation or shipment. After the dry vapor shipper is filled or charged with liquid nitrogen for a twenty-four hour period, the liquid nitrogen will permeate the dry vapor shipper's absorbent liner, which keeps the shipper cold for a period of time.

Currently, prior to shipment, the lab or transportation technicians, shippers or other professionals must physically lift and pour the liquid nitrogen out of the shipper. This may require two individuals to lift the shipper and hold the shipper in an angled or inverted position while the liquid or gas contents are emptied. The shipper may weigh upwards of 120 pounds and may need to be held in the pouring position for as long as one to two minutes. This is both difficult and potentially dangerous.

CA-A-627879 discloses a lift truck which enables a single operator to raise heavy drums to a desired height and to selectively discharge the contents. US-A-4213727 discloses apparatus for lifting, repositioning and transporting relatively large storage drums. EP-A1-0242820 discloses apparatus for inverting containers comprising main levers and an auxiliary lever.

Accordingly, there is a need for a system, device or apparatus to reduce the amount of manpower required to pour the liquid or gas and capture the liquid or gas for reuse in charging and/or filling another shipper.

### SUMMARY

Aspects of the invention are set out in the independent claims and preferred features are set out in the dependent claims. In general, there is described herein a dewar tipping system. The dewar tipping system lifts, tips, pours, angles or otherwise moves a dewar or other storage container to pour, discharge or otherwise let any liquid or gas flow from the dewar into a catch basin or another dewar.

The dewar tipping system includes a first dewar. The first dewar is configured to store a liquid or gas. The dewar tipping system include a dewar tipper. The dewar tipper includes a cradle. The cradle is configured to capture the first dewar. The dewar tipper includes a counter balance assembly. The counter balance assembly is configured to tip or angle the cradle to pour a liquid or gas out of the first dewar. The dewar tipper includes a handle. The handle is coupled to the counter balance assembly. The handle is configured to activate the counter balance assembly when in an engaged position. The dewar tipping system includes one of a second dewar or a catch basin. The one of the second dewar or the catch basin receives the liquid or gas when the first dewar is angled or inverted.

These and other embodiments may optionally include one or more of the following features. The dewar tipper may include a sliding device. The sliding device may be configured to pull the one of the second dewar or the catch basin under a centerline of the first dewar when the first dewar is angled or inverted. The dewar tipper may include a lid receptacle. The lid receptacle may be coupled to the cradle and may be configured to hold a lid of the first dewar when the cradle is tipped or angled to pour the liquid or gas out of the first dewar. The dewar tipper may include a retention band. The retention band may have a locking latch and may be coupled to the cradle. The retention band with the lock latch may be configured to hold the first dewar in the cradle when the cradle with the first dewar is angled or inverted. The dewar tipper may include a base coupled to the cradle and the one of the second dewar or the catch basin. The dewar tipper may include multiple wheels. The multiple wheels may be coupled to the base and may be configured to allow movement of the base, the cradle and the at least one of the second dewar or the catch basin. The dewar tipping system include a dewar roller. The dewar roller may be configured to move the first dewar when the first dewar is placed on the dewar roller.

There is also described herein a dewar tipper. The dewar tipper includes a cradle configured to capture the first dewar. The dewar tipper includes a counter balance assembly. The counter balance assembly is configured to tip or angle the cradle to pour a liquid or gas out of the first dewar. The dewar tipper includes a handle. The handle is coupled to the counter balance assembly and configured to activate the counter balance assembly when in an engaged position. The dewar tipper includes a second dewar or a catch basin to receive the liquid or gas when the first dewar is angled or inverted.

There is also described herein a dewar tipper. The dewar tipper includes a cradle configured to capture a first dewar. The dewar tipper includes a counter balance assembly configured to tip or angle the cradle to pour a liquid or gas out of the first dewar. The dewar tipper includes a handle coupled to the counter balance assembly. The handle is configured to activate the counter balance assembly when in an engaged position. The dewar tipper includes a catch basin to receive the liquid or gas when the first dewar is angled or inverted.

### BRIEF DESCRIPTION OF THE DRAWINGS

Other systems, methods, features, and advantages of the present invention will be apparent to one skilled in the art upon examination of the following figures and detailed description. Component parts shown in the drawings are not necessarily to scale and may be exaggerated to better illustrate the important features of the present invention.
FIG. 1 shows an example dewar tipping system using a catch basin as a receptacle according to an aspect of the invention.
FIG. 2 shows an example dewar tipping system using another dewar as a receptacle according to an aspect of the invention.
FIG. 3 shows a front perspective view of the dewar tipper of the dewar tipping system of FIGS. 1-2 according to an aspect of the invention.
FIG. 4 shows a rear perspective view of the dewar tipper of the dewar tipping system of FIGS. 1-2 according to an aspect of the invention.
FIG. 5 shows a close-up view of the retention band and locking latch of the dewar tipper of the dewar tipping system of FIGS. 1-2 according to an aspect of the invention.
FIG. 6 shows the dewar tipping system of FIG. 1 pouring the liquid or gas from the dewar into the catch basin according to an aspect of the invention.
FIG. 7 shows the dewar tipping system of FIG. 2 pouring the liquid or gas from the dewar into the other dewar according to an aspect of the invention.
FIG. 8A shows a perspective view of the dewar tipping system of FIGS. 1-2 from the catch-basin or other dewar side including one or more components of the dewar tipper according to an aspect of the invention.
FIG. 8B shows a perspective view of the dewar tipping system of FIGS. 1-2 from the cradle side including the motions of the one or more components of the dewar tipper according to an aspect of the invention.

### DETAILED DESCRIPTION

Disclosed herein are systems, apparatuses and devices for transporting and storing a liquid or gas, such as liquid nitrogen. The system, apparatus or device may be a dewar tipping system that captures a dewar in a cradle and tip, angles, inverts or otherwise moves the dewar into an angled or inverted position to pour liquid nitrogen out of the dewar into a catch basin or other dewar. Particular embodiments of the subject matter described in this specification may be implemented to realize one or more of the following advantages.

Typically, pouring the liquid or gas out of the dewar requires two individuals to lift the dewar and pour the contents of the dewar into a catch basin or other dewar. The dewar tipping system, however, allows the operation of pouring or emptying the liquid or gas into another dewar or the catch basin to be performed by a single individual. The dewar tipping system may have a dewar tipper that is made from a polymeric material, metal or other material so that the dewar tipper can withstand cryogenic temperatures. The dewar tipper captures a dewar in a cradle and holds the dewar in place with a retention band and a locking latch. An individual may depress or otherwise move a handle into an engaged position, which causes a counter balance assembly to lift, tip, move, angle or otherwise invert the cradle with the dewar pour the contents of the dewar out into the catch basin or other dewar. The retention band and locking latch hold the dewar in place. This allows a single individual to tip the dewar and pour out the liquid or gas into the catch basin. Moreover, the individual does not need to physically lift the dewar, and thus, the dewar tipping system minimizes any danger to and the amount of effort of the individual involved in lifting a dewar, which may weigh upwards of 120 lbs.

Other benefits and advantages of the dewar tipper include having a handle latch that holds the handle in the engaged position. Additionally, the dewar tipper may have a sliding device or mechanism that pulls or moves the catch basin or the receiving dewar underneath the inverted or angled dewar so that that the liquid or gas that is pouring out of the dewar flows into the catch basin or the receiving dewar. And, as the dewar is tipped, the liquid or gas that is poured out does not spill. Additional benefits and advantages include having a dewar roller for the dewar and/or a wheel-base for the dewar tipper, which allows the dewar and/or the dewar tipper to be easily transported or moved.

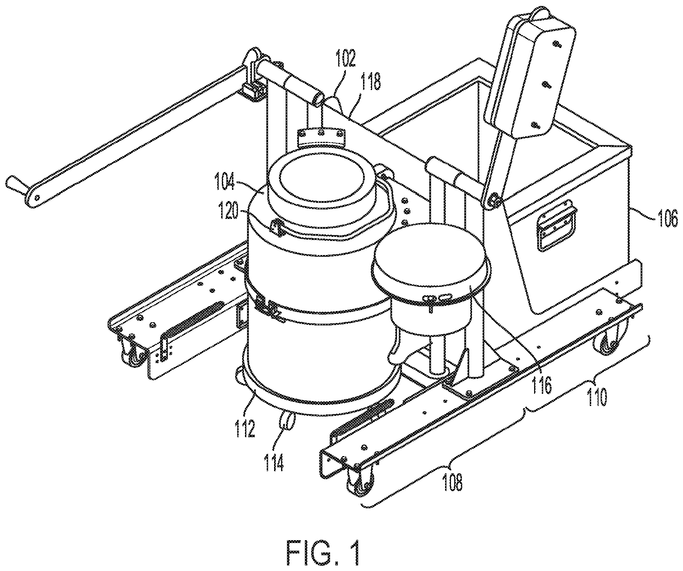

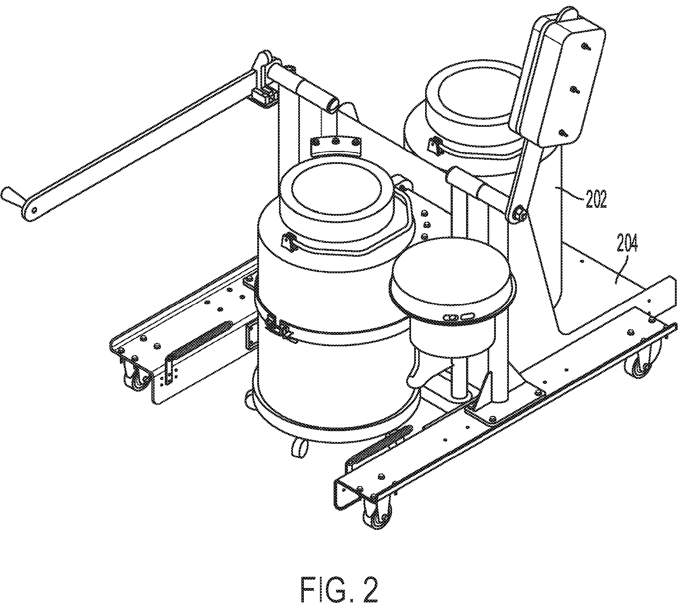

FIG. 1 shows a dewar tipping system 100 using a catch basin 106 as a receptacle. FIG. 2 shows the dewar tipping system 100 using another dewar 202 as a receptacle. The dewar tipping system 100 includes a dewar tipper 102, a dewar 104 and another receptacle, such as one of a catch basin 106 or another dewar 202. The dewar tipping system 100 may include a dewar roller 122.

The dewar tipper 102 receives the dewar 104 and tips, angles, inverts or otherwise moves the dewar 104 such that liquid or gas flows or empties out into at least one of a catch basin 106 or other dewar 202. A dewar 104 may be a double-walled flask or container that may be stored or transported at cryogenic temperatures. The dewar 104 may store a liquid or gas, such as liquid nitrogen. The dewar 104 may have a vapor plug or lid 116. The lid 116 may be inserted into the dewar 104 but allow the liquid or gas to escape so that pressure does not build up within the dewar 104. The dewar 104 may have a dewar handle 120. An individual may use the dewar handle 120 to lift or otherwise move the dewar 104.

The dewar tipper 102 may receive different dewars of different sizes and/or shapes. Some dewars, for example, may weigh up to approximately 120 pounds. The dewar tipper 102 may pour the dewar 104 into a catch basin 106, other dewar 202 or other receptacle that is positioned opposite the dewar 104 so that when the dewar 104 is inverted, angled or otherwise moved to pour out the liquid or gas, the liquid or gas flows, discharges or otherwise empties into the catch basin 106, the other dewar 202 or other receptacle.

The catch basin 106, the other dewar 202 or other receptacle may have a cavity that is formed from multiple walls and that receives the liquid or gas that flows or pours out of the dewar 104. The catch basin 106 or the other dewar 202 may be included as part of the dewar tipper 102 or be a separate component within the dewar tipping system 100. The dewar tipper 102 may receive the dewar 104 on one side 108 of the dewar tipper 102 and receive the catch basin 106 or other dewar 202 on another side 110 of the dewar tipper 102. The other side 110 may be opposite the one side 108 and be separated by a wall 118.

Moreover, the catch basin 106 or other dewar 202 may be of any shape and/or size. The catch basin 106 may be rectangular or square-shaped, as shown in FIG. 1 for example. Four walls around a cavity of the rectangular shaped form the catch basin 106. The catch basin 106 or other dewar 202 may be insulated or made from material that maintains the cryogenic temperatures of the liquid or gas poured into the catch basin 106 or the other dewar 202. This allows for the liquid or gas to be reused in cooling another dewar to cryogenic temperatures. Further, in yet other embodiments, catch basic 106 can be connected to a drain or other system to remove the used liquid or gas.

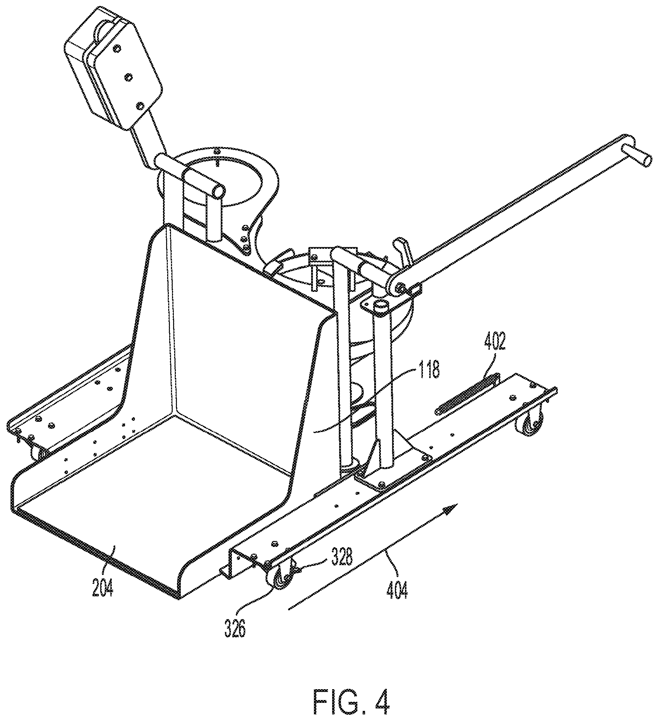

In some implementations the catch basin 106, the other dewar 202 or other receptacle may be placed on a sled 204 or other sliding device, as shown in FIGS. 2 and 4 for example. The sled 204 may be coupled to the dewar tipper 102 or be part of the dewar tipper 102 via a spring 402, rail or other sliding device that moves, pulls or otherwise retracts the sled 204 or other sliding device when the counter balance assembly 304 tips, angles or moves the cradle 302. The spring 402 may pull or otherwise move the sled toward the wall in the direction 404 when the counter balance assembly 304 tips, angles or moves the cradle 302 to align the catch basin 106 or the other dewar 202 with the dewar 104 when the dewar 104 is inverted so that the liquid or gas that is poured out does not spill.

The dewar tipping system 100 may have a dewar roller 112. The dewar 104 may rest or be positioned on the dewar roller 112. The dewar roller 112 may have one or more wheels 114. When the dewar 104 is placed or positioned on the dewar roller 112, the dewar roller 112 may allow for the dewar 104 to be pushed, pulled, moved or otherwise transported on the dewar roller 112. The dewar roller 112 may be coupled to the dewar 104 and may remain coupled with the dewar 104 even when the dewar 104 is received by the cradle 302 and inverted, angled or otherwise moved to pour or empty the liquid or gas inside the dewar 104. This reduces the amount of effort needed by an individual to move the dewar 104 from one location or position to another location or position. Moreover, an individual does not need to lift the dewar 104.

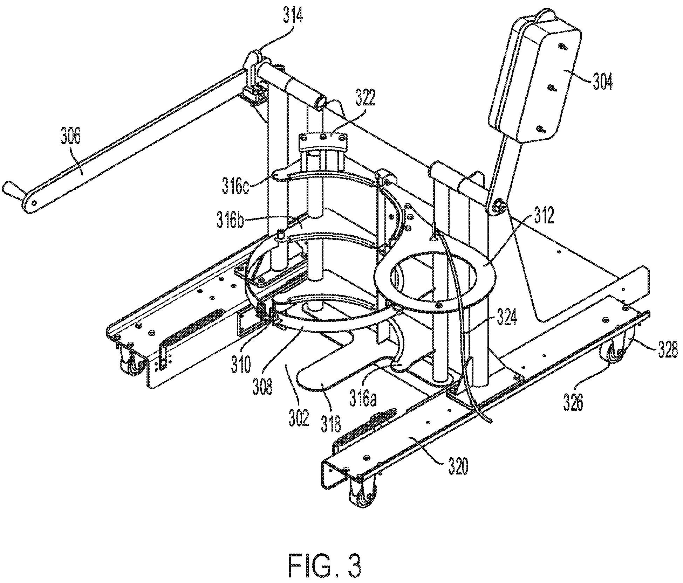

Referring to FIG. 3, which shows a perspective view of the dewar tipper 102, the dewar tipper 102 includes a cradle 302, a counter balance assembly 304, a handle 306, a dewar tipper base 320 and multiple wheels 326. The dewar tipper 102 may include a retention band 308 with a locking latch 310, a lid receptacle 312, a counter balance latch 314 and/or a dewar handle holder 322.

The dewar tipper 102 may have two sides 108, 110 with a wall 118 in-between. On one side 108 of the wall 118, the dewar tipper 102 has the cradle 302, and on the other side 110 of the wall 118, the dewar tipper 102 receives a receptacle, such as a catch basin 106 or other dewar 202.

The dewar tipper 102 includes a cradle 302 or other receptacle that has a cavity that receives the dewar 104 or other storage container that stores the liquid or gas. The cradle 302 may be modular so that different cradles may be interconnected with a side of the dewar tipper 102 to accommodate different sizes and/or shapes of dewars 104 or other storage containers. The cradle 302 may have a cradle base 318 and one or more rings 316a-b and coupled to the wall 118. The cradle base 318 may receive or slip under a top portion of a dewar roller 112 when the dewar roller 112 is slid or moved to align with the one or more rings 316a-b. The cradle base 318 provides a foundation for the dewar roller 112. The one or more rings 316a-b may be partial rings each formed as a semicircle. The one or more rings 316a-b are positioned or stacked vertically or perpendicular to the cradle base 318 to provide support. Moreover, the number of the one or more rings 316a-b that are stacked equidistant vertically or perpendicular to the cradle base 318 may depend on or be based on the height of the dewar 104 that the dewar tipper 102 is configured to receive. The one or more rings 316a-b may be partial rings that receive and support the dewar 104 and form a partial cavity to receive the dewar 104 that is rolled into the cradle 302.

In some implementations, the cradle 302 may be adjustable. The cradle may be adjusted to different shapes and/or sizes to fit and receive different dewars 104 or storage containers. For example, the diameter of the rings that form the cradle 302 may be adjusted to fit dewars 104 that have different diameters, for example. Moreover, the height of the cradle 302 may be adjusted or reconfigured by adding additional rings to receive the dewar 104. By adding or removing additional rings, the height of the adjustable cradle 302 may increase or decrease to accommodate a dewar 104 with a greater height or a lesser height, respectively.

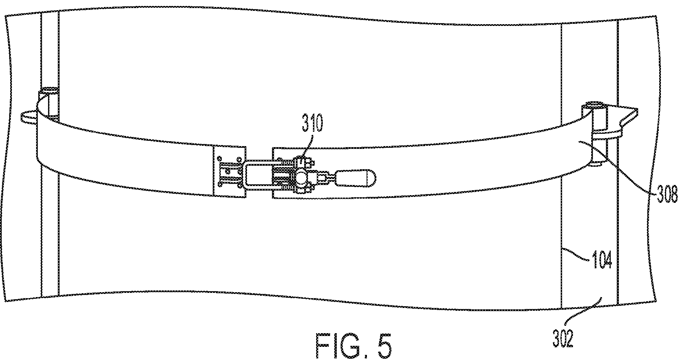

The dewar tipper 102 may include a retention band 308 with a locking latch 310 or other retainer to hold the dewar 104 within the cradle 302. The retention band 308 with the locking latch 310 may be coupled to the cradle 302. For example, the retention band 308 may be placed around the diameter of the dewar 104 and latched using the locking latch 310. FIG. 5 shows a close-up perspective view of the retention band 308 and the locking latch 310. When the dewar 104 is inserted into the cradle 302 and the cradle 302 receives the dewar 104, the retention band 308 may be placed around the dewar 104 within the cradle 302, and when the locking latch 310 is locked or engaged, the retention band 308 and the locked locking latch 310 hold the dewar 104 within the cradle 302 even when the cradle 302 is angled or inverted. The retention band 308 may be made of metal or a temperature sensitive material that may withstand cryogenic temperatures. The retention band 308 may be placed or wrapped around the dewar 104 and the locking latch 310 may then be locked or engaged to hold the dewar 104 in place within the cradle 302.

**In** proximity to the cradle 302, the dewar tipper 102 may have a dewar handle holder 322. The dewar handle holder 322 may be a crevice that receives the dewar handle 120, an obstruction that prevents the dewar handle 120 from moving and/or a latch or fastener which holds the dewar handle 120 so that the dewar handle 120 does not obstruct, flip or otherwise move when the dewar 104 is angled, inverted or otherwise moved. The dewar handle holder 322 may be integrally formed, connected or otherwise coupled to the cradle 302, such as at the top ring 316c of the one or more rings 316a-c of the cradle 302. The dewar handle holder 322 holds the dewar handle 120 away from or outside the path of the liquid or gas, e.g., away from the centerline of the dewar 104 when inverted over the catch basin 106 or the other dewar 202, when the liquid or gas is poured out of the dewar 104. When the dewar handle holder 322 is pushed, moved or no longer obstructs the dewar handle 120, the dewar handle 120 may be lifted, moved or otherwise used to hold or lift the dewar 104.

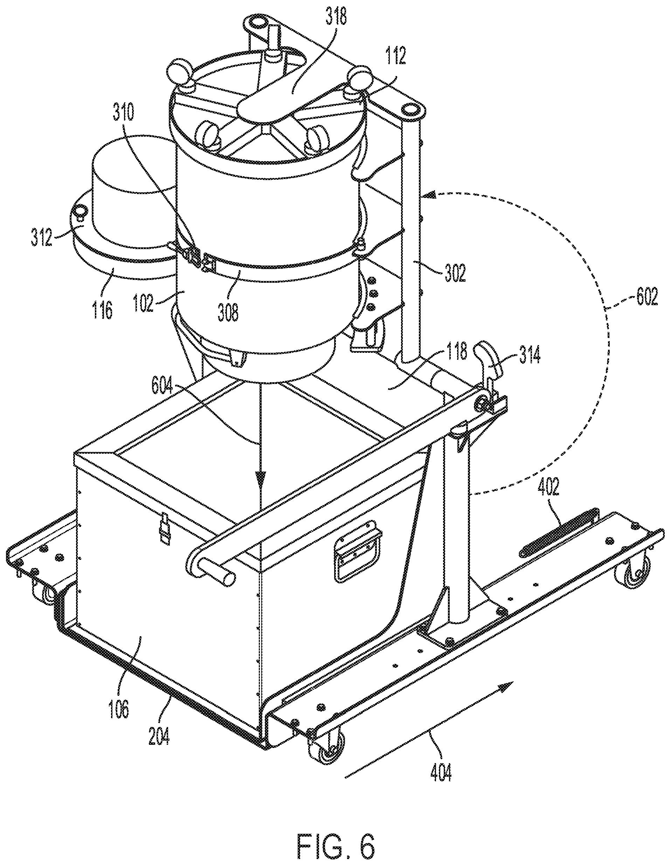

The dewar tipper 102 may include a lid receptacle 312, such as a lid retaining ring. The lid receptacle 312 may be coupled to a top portion of the cradle 302, such as a top ring 316c of the one or more rings 316b-c. The lid receptacle 312 receives the lid 116 or vapor plug of the dewar 104 and holds the lid 116 or vapor plug within the lid receptacle 312 when the dewar tipper 102 inverts, angles or moves the dewar 104 into an inverted position, as shown in FIGS. 6-7. The lid receptacle 312 may be adjustable in size and/or shape based on the size and/or shape of the lid 116 or vapor plug.

The lid receptacle 312 may have a fastening device, such as a lanyard 324. The fastening device may be connected, attached or otherwise coupled to the lid receptacle 312. The fastening device may secure the lid 116 or vapor plug of the dewar 104 to the lid receptacle 312 and prevent the lid 116 or vapor plug in the lid receptacle 312 from falling out of the lid receptacle 312 when the dewar 104 is in the cradle 302 and inverted by the counter balance assembly 304.

The dewar tipper 102 may include a handle 306, a button, a knob or other activation device. The handle 306 is connected or coupled to the counter balance assembly 304. The handle 306 may have an engaged and a disengaged position. When force has not been applied to the handle 306, the handle 306 may bias to the engaged or natural position and the counter balance assembly 304 may be activated.

In the disengaged position, the handle 306 may not activate the counter balance assembly 304 and the cradle 302 is not moved, angled, rotated or otherwise inverted. The longitudinal axis of the cradle 302 remains perpendicular to the ground and the liquid or gas remains within the received dewar 104. When the handle 306 rotates, positions, moves or otherwise adjusts to the engaged position, the counter balance assembly 304 may activate or engage, which causes the cradle 302 to move, angle or invert over the catch basin 106 or other dewar 202. As a result, any liquid or gas within the dewar 104 positioned within the cradle 302 pours, empties or otherwise discharges into the catch basin 106 or other dewar 202 on the opposite side 110 of the originally positioned cradle 302.

In some implementations, the dewar tipper 102 may have a different activation device instead of a handle 306. The different activation device may be pressed down, tumed or otherwise manipulated to activate the counter balance assembly 304 or other tipping device, such as a hydraulic or motorized tipper.

The dewar tipper 102 includes a counter balance assembly 304, a hydraulic or motorized assembly or other tipping device. The counter balance assembly 304 lifts, angles, inverts or otherwise moves the cradle 302 with a dewar 104 into an angled or inverted position to pour, discharge or empty the liquid or gas in the dewar 104 into the catch basin 106 or the other dewar 202, as shown in FIGS. 6-7. The counter balance assembly 304 may have a self-biasing mechanism that automatically reduces the amount of force needed by the user to tip, angle or otherwise move the cradle 302 when a counter balance latch 314 is disengaged to allow the handle 306 to move freely and the counter balance assembly 304 to be released.

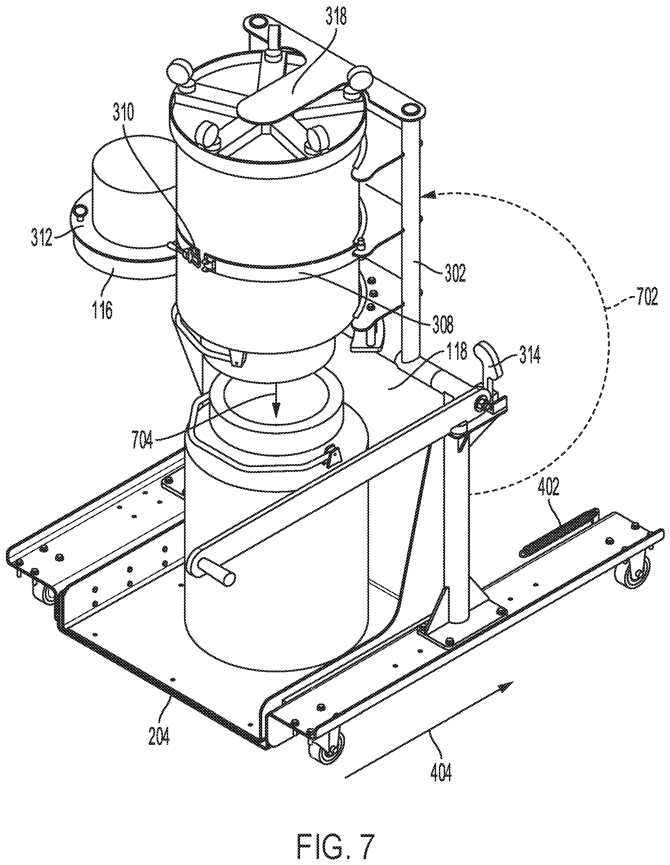

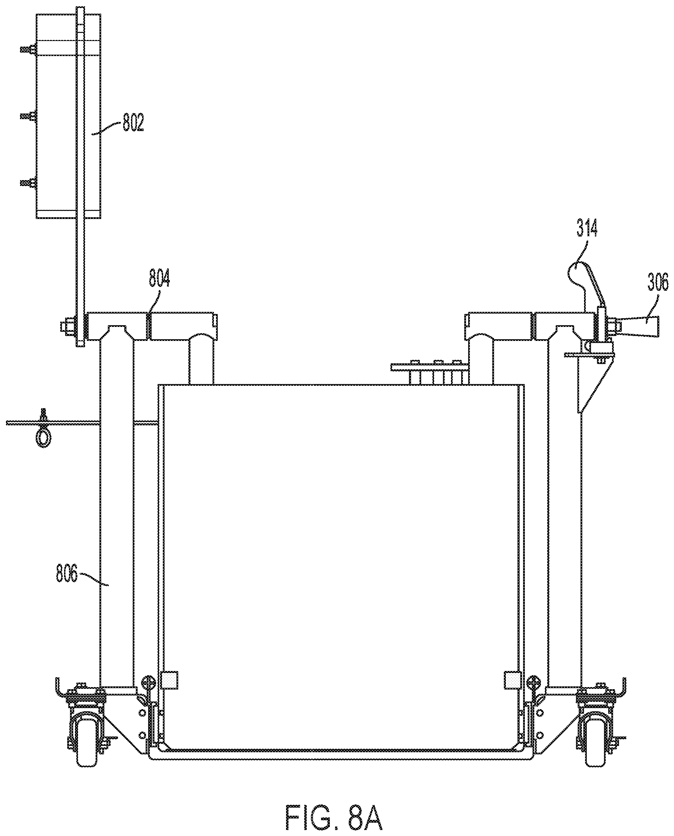

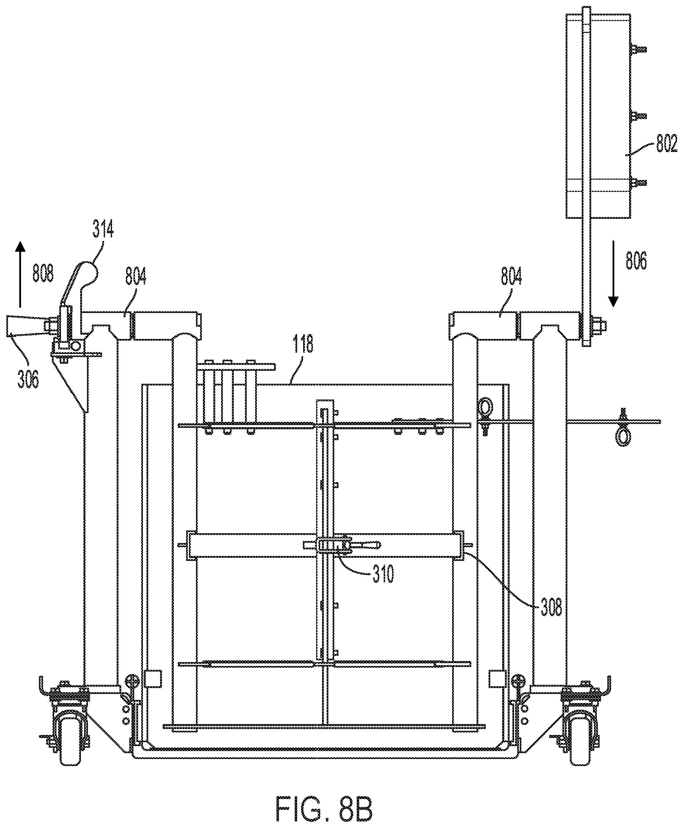

FIG. 6 shows the counter balance assembly 304 tipping, moving, angling or otherwise inverting the dewar 104 in the cradle 302 over the catch basin 106, and FIG. 7 shows the counter balance assembly 304 tipping, moving, angling or otherwise inverting the dewar 104 in the cradle 302 over the other dewar 202. The counter balance assembly 304 rotates the cradle 302 with the dewar 104 in the direction 602, 702 so that the dewar 104 is inverted directly over the catch basin 106 or the other dewar 202, respectively. The counter balance assembly 304 may hold the cradle 302 in the inverted position when the cradle 302 is angled or inverted over the catch basin 106 or the other dewar 202. While the counter balance assembly 304 tips the dewar 104, the counter balance assembly 304 simultaneously pulls, moves or otherwise positions the sled 204 closer to the wall 118 in the direction 404 on the opposite side 110 of the dewar tipper 102. The counter balance assembly 304 positions the dewar 104 in the cradle 302 over the cavity of the catch basin 106 or the other dewar 202 so that the liquid or gas within the pours or empties out in the direction 604, 704 into the cavity of the catch basin 106 or the other dewar 202, respectively. The counter balance assembly 304 may be set or configured so that the center of the cavity or opening of the dewar 104 is positioned directly above the center or cavity of the catch basin 106 or other dewar 202, respectively, when inverted. This prevents or minimizes any spillage of the liquid or gas that may be in the dewar 104. FIG. 8 further shows and describes the different components of the counter balance assembly 304.

The dewar tipper 102 may include a counter balance latch 314. The counter balance latch 314 may be coupled, engaged with or otherwise positioned to lock the handle 306, such as in a horizontal position parallel to the ground. When the counter balance latch 314 is engaged, the handle 306 is positioned in the disengaged position and the counter balance latch 314 prevents the handle 306 from biasing or moving back into the natural or engaged position and/or prevents the counter balance assembly 304 from releasing. The natural position of the handle 306 may be where the counter balance assembly 304 generates a force that tips, moves or angles the cradle 302, and so, the counter balance latch 314 prevents the counter balance assembly 304 from tipping, moving or otherwise angling the cradle 302 by preventing the handle 306 from going to the engaged position. For example, without the counter balance latch 314 or when the counter balance latch 314 is disengaged, the counter balance assembly 304 may cause the handle 306 to rotate or otherwise move to the natural or engaged position and cause the counter balance assembly 304 to rotate the cradle 302 in the direction 602, 702. This prevents the counter balance assembly 304 from releasing even when there is no dewar 104 in the dewar tipper 102.

The dewar tipper 102 includes a dewar tipper base 320. The dewar tipper base 320 may be coupled to both sides 108, 110 of the dewar tipper 102 and provide a foundation for the dewar tipper 102. The dewar tipper base 320 interconnects the different components of the dewar tipper 102, such as the different sides 108, 110 of the dewar tipper 102. Other components, such as the cradle 302 and/or counter balance assembly 304 may interconnect with the dewar tipper base 320 to form the dewar tipper 102. This allows the different components of the dewar tipper 102 to be interchangeable and allows for the dewar tipper 102 to be configured or reconfigured to tip or pour different sized and/or shaped dewars into one of a catch basin 106 or other dewar 202.

The dewar tipper 102 may include a sled 402 or other sliding device, which may be coupled or placed on the dewar tipper base 320, as shown in FIG. 4 for example. The sled 402 may rest or be positioned on the other side 110, which is opposite the side 108 with the cradle 302, and perpendicular to the wall 118 of the dewar tipper 102. The sled 402 may retract toward the wall 118 as the counter balance assembly 304 lifts, angles, rotates or otherwise moves the cradle 302 to pour the liquid or gas in the dewar 104 into the catch basin 106 or other dewar 202, which rests on the sled 402. The sled 402 moves toward the wall 118, in the direction 404, as the counter balance assembly 304 rotates the handle 306 into the engaged position and the cradle 302 is rotated to become inverted. This prevents any spillage resulting from the pouring of the dewar 104 into the catch basin 106 or other dewar 202.

The dewar tipper 102 may include one or more wheels 326 including multiple wheels 326. The one or more wheels 326 may be coupled to the dewar tipper base 320. Each wheel of the multiple wheels 326 may be positioned underneath and attached to the dewar tipper base 320 at the corners. The one or more wheels 326 allow movement of the dewar tipper 102. The one or more wheels 326 may be connected to a rotating device, such as a ball bearing, which allows 360 degree rotation of the one or more wheels 326 parallel to the surface or ground. This allows for movement in any direction when the one or more wheels rotate perpendicular to the ground or surface. When the dewar tipper 102 is pushed, pulled or otherwise moved the one or more wheels 326 roll the dewar tipper 102 along a surface.

The dewar tipper 102 may have one or more wheel locks 328 coupled to the one or more wheels 326. A wheel lock 328 may be coupled to each of the one or more wheels 326. The one or more wheel locks 328 may be engaged to prevent the one or more wheels 326 from moving or disengaged to allow the one or more wheels 326 to rotate and move either perpendicular or parallel to the surface or ground.

FIG. 8A shows a perspective view of the dewar tipper 102 with the side 110 in front where the catch basin 106 or the other dewar 202 is positioned, and FIG. 8B shows another perspective view of the dewar tipper 102 the side 108 in front where the cradle 302 is positioned to receive the dewar 104. The counter balance assembly 304 includes a weight 802. The weight 802 is coupled to the wall 118 and the handle 306 via one or more hinges 804. When the counter balance latch 314 is disengaged, the handle 306 can freely move and the weight 802 is released to drive a force downward in the direction 806. As the weight 802 directs a force in the direction 806 either alone or in combination with the rotating movement of the handle 306 in the direction 808 into the engaged position, the wall 118 with the cradle 302 is angled upward to pour, discharge or empty a dewar 104 that is received in the cradle 302.

The force applied by the weight in the direction 806 may continue to move downward and/or the handle 306 may continue to rotate in the direction 808 until the wall 118 with the cradle 302 has inverted 180 degrees. When the cradle 302 is inverted 180 degrees, the dewar 104 within the cradle 302 will be directly over the catch basin 106 or the other dewar 202 that resides on the sled 204 on the side 110. Simultaneously and/or in conjunction with the movement of the handle 306 moving in the direction 808 and the weight 802 moving in the direction 806, the sled 204 is pulled inward toward the center of the dewar tipper 102 so that the centerline of the dewar 104 is aligned with the center of the cavity of the catch basin 106 or the other dewar 202.

## Claims

1. A dewar tipping system (100), comprising:
a first dewar (104) configured to store a liquid or a gas;
a dewar tipper (102) including:
a cradle (302) configured to capture the first dewar,
a counter balance assembly (304) configured to tip or angle the cradle to pour a liquid or gas out of the first dewar, and
a handle (306) coupled to the counter balance assembly and configured to activate the counter balance assembly when in an engaged position; and
one of a second dewar (202) or a catch basin (106) to receive the liquid or gas when the first dewar is angled or inverted.

2. The dewar tipping system (100) of claim 1, wherein the dewar tipper (102) further includes:
a retention band (308) with a locking latch (310) and coupled to the cradle, wherein the retention banc with the locking latch is configured hold the first dewar (104) in the cradle when the cradle with the first dewar is angled or inverted.

3. The dewar tipping system (100) of claim 1, further comprising:
a dewar roller (112) configured to move the first dewar (104) when the first dewar is placed on the dewar roller.

4. The dewar tipping system (100) of claim 1, wherein the dewar tipper (102) further comprises:
a sliding device (204) configured to pull the at least one of the second dewar (202) or the catch basin (106) under a centerline of the first dewar (104) when the first dewar is angled or inverted.

5. The dewar tipping system (100) of claim 1, wherein the dewar tipper (102) further comprises:
a lid receptacle (312) coupled to the cradle and configured to hold a lid of the first dewar (104) when the cradle is tipped or angled to pour the liquid or gas out of the first dewar.

6. The dewar tipping system (100) of claim 1, wherein the dewar tipper (102) further comprises:
a locking latch (310) or band (308) coupled to the cradle and configured hold the first dewar (104) in the cradle when the cradle with the first dewar is angled or inverted.

7. The dewar tipping system (100) of claim 1, wherein the dewar tipper (102) further comprises:
a handle latch (314) coupled to the cradle (302) and configured to engage the handle (306) and to hold the handle in the engaged position.

8. The dewar tipping system (100) of claim 1, wherein the dewar tipper (102) further comprises:
a base (320) coupled to the cradle (302) and the at least one of the second dewar (202) or the catch basin (106);
and
a plurality of wheels (326) coupled to the base (320) and configured to allow movement of the base, the cradle and the at least one of the second dewar or the catch basin.

9. The dewar tipping system (100) of claim 1, wherein the one of the second dewar (202) or the catch basin (106) is the catch basin.

10. The dewar tipping system (100) of claim 1, wherein the cradle (302) is a modular or interchangeable cradle that is configured to be removed and interchanged with another cradle of a different size or shape that receives another dewar of the different size or shape.

11. The dewar tipping system (100) of claim 1, wherein when the handle (306) is positioned in the engaged position, the counter balance assembly (304) is tipped, angled or inverted such that the first dewar (104) is tipped, angled or inverted directly over the catch basin (106) such that the liquid or gas pours out into the catch basin.

12. The dewar tipping system (100) of claim 11, wherein the counter balance assembly (304) includes a spring (402) or slide, wherein when the counter balance assembly (304) is tipped, angled or inverted over the catch basin (106), the spring or slide moves the catch basin under a centerline of the first dewar (104).

13. The dewar tipping system (100) of claim 1, wherein the dewar tipper further comprises:
a base (320) coupled to the cradle (302) and the at least one of the second dewar (202) or the catch basin (106);
a plurality of wheels (326) coupled to the base (320) and configured to allow movement of the dewar tipper (102); and
a locking device (328) configured to lock the plurality of wheels to prevent movement of the dewar tipper.

14. The dewar tipping system (100) of claim 1, wherein the cradle (302) is adjustable to receive different sizes or shapes of dewars.

## Patentansprüche

1. Dewar-Kippsystem (100), das Folgendes umfasst:
einen ersten Dewar (104), der zum Aufbewahren einer Flüssigkeit oder eines Gases konfiguriert ist;
einen Dewar-Kipper (102), der Folgendes umfasst:
eine Halterung (302), die zum Festhalten des ersten Dewars konfiguriert ist,
eine Gegengewichtsbaugruppe (304), die zum Kippen oder Neigen der Halterung konfiguriert ist, um eine Flüssigkeit oder ein Gas aus dem ersten Dewar auszugießen, und
einen Handgriff (306), der mit der Gegengewichtsbaugruppe gekoppelt und zum Aktivieren der Gegengewichtsbaugruppe in einer Eingriffsposition konfiguriert ist; und
einen zweiten Dewar (202) oder eine Auffangwanne (106) zum Auffangen der Flüssigkeit oder des Gases, wenn der erste Dewar geneigt oder umgedreht wird.

2. Dewar-Kippsystem (100) nach Anspruch 1, wobei der Dewar-Kipper (102) ferner Folgendes umfasst:
ein Halteband (308) mit einer Arretierung (310) und mit der Halterung gekoppelt, wobei das Halteband mit der Arretierung zum Halten des ersten Dewars (104) in der Halterung konfiguriert ist, wenn die Halterung mit dem ersten Dewar geneigt oder umgedreht wird.

3. Dewar-Kippsystem (100) nach Anspruch 1, das ferner Folgendes umfasst:
eine Dewar-Rolle (112), die zum Bewegen des ersten Dewars (104) konfiguriert ist, wenn der erste Dewar auf die Dewar-Walze gesetzt wird.

4. Dewar-Kippsystem (100) nach Anspruch 1, wobei der Dewar-Kipper (102) ferner Folgendes umfasst:
eine Schiebevorrichtung (204), die zum Ziehen des zweiten Dewars (202) und/oder des Auffangbehälters (106) unter eine Mittellinie des ersten Dewars (104) konfiguriert ist, wenn der erste Dewar geneigt oder umgedreht wird.

5. Dewar-Kippsystem (100) nach Anspruch 1, wobei der Dewar-Kipper (102) ferner Folgendes umfasst:
eine Deckelaufnahme (312), die mit der Halterung gekoppelt und zum Halten eines Deckels des ersten Dewars (104) konfiguriert ist, wenn die Halterung gekippt oder geneigt wird, um die Flüssigkeit oder das Gas aus dem ersten Dewar auszugießen.

6. Dewar-Kippsystem (100) nach Anspruch 1, wobei der Dewar-Kipper (102) ferner Folgendes umfasst:
eine Arretierung (310) oder ein Band (308), die/das mit der Halterung gekoppelt und zum Halten des ersten Dewars (104) in der Halterung konfiguriert ist, wenn die Halterung mit dem ersten Dewar geneigt oder umgedreht wird.

7. Dewar-Kippsystem (100) nach Anspruch 1, wobei der Dewar-Kipper (102) ferner Folgendes umfasst:
eine Handgriffraste (314), die mit der Halterung (302) gekoppelt und zum Eingreifen in den Handgriff (306) und zum Halten des Handgriffs in der Eingriffsposition konfiguriert ist.

8. Dewar-Kippsystem (100) nach Anspruch 1, wobei der Dewar-Kipper (102) ferner Folgendes umfasst:
eine Basis (320), die mit der Halterung (302) und dem zweiten Dewar (202) und/oder dem Auffangbehälter (106) gekoppelt ist; und
mehrere Räder (326), die mit der Basis (320) gekoppelt und zum Zulassen einer Bewegung der Basis, der Halterung und des zweiten Dewars und/oder Auffangbehälters konfiguriert sind.

9. Dewar-Kippsystem (100) nach Anspruch 1, wobei das zweite Dewar (202) oder das Auffangbehälter (106) das Auffangbecken ist.

10. Dewar-Kippsystem (100) nach Anspruch 1, wobei die Halterung (302) eine modulare oder austauschbare Halterung ist, die zum Entfernen und Austauschen gegen eine andere Halterung mit einer anderen Größe oder Form konfiguriert ist, die einen anderen Dewar mit der anderen Größe oder Form aufnimmt.

11. Dewar-Kippsystem (100) nach Anspruch 1, wobei, wenn der Handgriff (306) in der Eingriffsposition positioniert ist, die Gegengewichtsbaugruppe (304) gekippt, abgewinkelt oder umgedreht wird, so dass der erste Dewar (104) direkt über dem Auffangbehälter (106) gekippt, abgewinkelt oder umgedreht wird, so dass die Flüssigkeit oder das Gas in den Auffangbehälter ausfließt.

12. Dewar-Kippsystem (100) nach Anspruch 11, wobei die Gegengewichtsbaugruppe (304) eine Feder (402) oder einen Schieber umfasst, wobei, wenn die Gegengewichtsbaugruppe (304) über dem Auffangbehälter (106) gekippt, geneigt oder umgedreht wird, die Feder oder der Schieber den Auffangbehälter unter eine Mittellinie des ersten Dewars (104) bewegt.

13. Dewar-Kippsystem (100) nach Anspruch 1, wobei der Dewar-Kipper ferner Folgendes umfasst:
eine Basis (320), die mit der Halterung (302) und dem zweiten Dewar (202) und/oder dem Auffangbehälter (106) gekoppelt ist;
mehrere Räder (326), die mit der Basis (320) gekoppelt und zum Zulassen einer Bewegung des Dewar-Kippers (102) konfiguriert sind; und
eine Sperrvorrichtung (328), die zum Sperren der mehreren Räder konfiguriert ist, um eine Bewegung des Dewar-Kippers zu verhindern.

14. Dewar-Kippsystem (100) nach Anspruch 1, wobei die Halterung (302) justierbar ist, um Dewars unterschiedlicher Größe oder Form aufzunehmen.

## Revendications

1. Système de basculement d'un récipient de Dewar (100), comprenant :
un premier récipient de Dewar (104) configuré pour stocker un liquide ou un gaz ;
un organe de basculement de récipient de Dewar (102) incluant :
un berceau (302) configuré pour capturer le premier récipient de Dewar,
un ensemble formant contrepoids (304) configuré pour basculer ou incliner le berceau afin de verser un liquide ou un gaz hors du premier récipient de Dewar, et
une poignée (306) couplée à l'ensemble formant contrepoids et configurée pour activer l'ensemble formant contrepoids lorsqu'elle est dans une position de mise en prise ; et
un élément parmi un deuxième récipient de Dewar (202) ou un bac collecteur (106) afin de recevoir le liquide ou le gaz lorsque le premier récipient de Dewar est incliné ou inversé.

2. Système de basculement d'un récipient de Dewar (100) de la revendication 1, dans lequel l'organe de basculement de récipient de Dewar (102) inclut en outre :
une bande de retenue (308) avec un loquet de verrouillage (310) et couplée au berceau, la bande de retenue avec le loquet de verrouillage étant configurée pour maintenir le premier récipient de Dewar (104) dans le berceau lorsque le berceau avec le premier récipient de Dewar est incliné ou inversé.

3. Système de basculement d'un récipient de Dewar (100) de la revendication 1, comprenant en outre :
un organe de roulement de récipient de Dewar (112) configuré pour déplacer le premier récipient de Dewar (104) lorsque le premier récipient de Dewar est placé sur l'organe de roulement.

4. Système de basculement d'un récipient de Dewar (100) de la revendication 1, dans lequel l'organe de basculement de récipient de Dewar (102) comprend en outre :
un dispositif de coulissement (204) configuré pour tirer l'au moins un élément parmi le deuxième récipient de Dewar (202) ou le bac collecteur (106) sous un axe du premier récipient de Dewar (104) lorsque le premier récipient de Dewar est incliné ou inversé.

5. Système de basculement d'un récipient de Dewar (100) de la revendication 1, dans lequel l'organe de basculement de récipient de Dewar (102) comprend en outre :
un réceptacle de couvercle (312) couplé au berceau et configuré pour maintenir un couvercle du premier récipient de Dewar (104] lorsque le berceau est basculé ou incliné afin de verser le liquide ou le gaz hors du premier récipient de Dewar.

6. Système de basculement d'un récipient de Dewar (100) de la revendication 1, dans lequel l'organe de basculement de récipient de Dewar (102) comprend en outre :
un loquet de verrouillage (310) ou une bande (308) couplé/e au berceau et configuré/e pour maintenir le premier récipient de Dewar (104) dans le berceau lorsque le berceau avec le premier récipient de Dewar est incliné ou inversé.

7. Système de basculement d'un récipient de Dewar (100) de la revendication 1, dans lequel l'organe de basculement de récipient de Dewar (102) comprend en outre :
un loquet de poignée (314) couplé au berceau (302), et configuré pour se mettre en prise avec la poignée (306) et pour maintenir la poignée dans la position de mise en prise.

8. Système de basculement d'un récipient de Dewar (100) de la revendication 1, dans lequel l'organe de basculement de récipient de Dewar (102) comprend en outre :
une base (320) couplée au berceau (302) et l'au moins un élément parmi le deuxième récipient de Dewar (202) ou le bac collecteur (106) ; et
une pluralité de roulettes (326) couplée à la base (320) et configurée pour permettre un mouvement de la base, le berceau et l'au moins un élément parmi le deuxième récipient de Dewar ou le bac collecteur.

9. Système de basculement d'un récipient de Dewar (100) de la revendication 1, dans lequel cet élément parmi le deuxième récipient de Dewar (202) ou le bac collecteur (106) est le bac collecteur.

10. Système de basculement d'un récipient de Dewar (100) de la revendication 1, dans lequel le berceau (302) est un berceau modulaire ou interchangeable qui est configuré pour être retiré ou substitué avec un autre berceau ayant une taille ou forme différente qui reçoit un autre récipient de Dewar ayant la taille ou la forme différente.

11. Système de basculement d'un récipient de Dewar (100) de la revendication 1, dans lequel lorsque la poignée (306) est positionnée dans la position de mise en prise, l'ensemble formant contrepoids (304) est basculé, incliné ou inversé de telle sorte que le premier récipient de Dewar (104) soit basculé, incliné ou inversé directement au-dessus du bac collecteur (106) de telle sorte que le liquide ou le gaz s'écoule jusque dans le bac collecteur.

12. Système de basculement d'un récipient de Dewar (100) de la revendication 11, dans lequel l'ensemble formant contrepoids (304) inclut un ressort (402), ou une coulisse, dans lequel lorsque l'ensemble formant contrepoids (304) est basculé, incliné ou inversé au-dessus du bac collecteur (106), le ressort ou la coulisse déplace le bac collecteur sous un axe du premier récipient de Dewar (104).

13. Système de basculement d'un récipient de Dewar (100) de la revendication 1, dans lequel l'organe de basculement de récipient de Dewar comprend en outre :
une base (320) couplée au berceau (302) et l'au moins un élément parmi le deuxième récipient de Dewar (202) ou le bac collecteur (106) ;
une pluralité de roulettes (326) couplée à la base (320), et configurée pour permettre un mouvement de l'organe de basculement de récipient de Dewar (102) ; et
un dispositif de verrouillage (328) configuré pour verrouiller la pluralité de roulettes pour empêcher un mouvement de l'organe de basculement de récipient de Dewar.

14. Système de basculement d'un récipient de Dewar (100) de la revendication 1, dans lequel le berceau (302) est ajustable pour recevoir différentes tailles ou formes de récipients de Dewar.
